# EUROPÄISCHE PATENTSCHRIFT

(11) **EP 3 024 321 B1**
(45) Veröffentlichungstag und Bekanntmachung des Hinweises auf die Patenterteilung: **14.11.2018**
(21) Anmeldenummer: 14742216.6
(22) Anmeldetag: 23.07.2014
(51) Int. Cl.: A01M 7/00

(54) **BEFÜLLMANAGEMENT FÜR PFLANZENSCHUTZMITTEL**
FILLING MANAGEMENT FOR CROP PROTECTION PRODUCT
GESTION DE REMPLISSAGE POUR AGENT PHYTOSANITAIRE

(30) Priorität: 26.07.2013 DE 102013107993
(43) Veröffentlichungstag der Anmeldung: 01.06.2016
(73) Patentinhaber: Amazonen-Werke H. Dreyer GmbH & Co. KG, 49205 Hasbergen (DE); BASF SE, 67056 Ludwigshafen am Rhein (DE)
(72) Erfinder: KIEFER, Stefan, 49074 Osnabrück (DE); MINDRUP, Tobias, 49080 Osnabrück (DE); FRÖSCHLE, Heike, 49124 Georgsmarienhütte (DE); WEGKAMP, Heinz-Gerd, 58623 Lampertheim (DE); KOVERMANN, Timo, 49191 Belm (DE); HARTMANN, Bernd, 67105 Schifferstadt (DE)
(86) Internationale Anmeldenummer: PCT/EP2014/065811
(87) Internationale Veröffentlichungsnummer: WO 2015/011187

(56) Entgegenhaltungen:
- DE-A1- 10 247 490
- DE-A1-102009 026 234
- DE-A1-102012 104 169
- "UX 11200", , 19. November 2012 (2012-11-19), Seiten 1-24, XP55147244, Gefunden im Internet: URL:http://info.amazone.de/DisplayInfo.asp x?id=25621 [gefunden am 2014-10-17]
- "Comfort-Paket 2 für Pantera 4001", , 25. März 2013 (2013-03-25), Seiten 1-16, XP55147270, Gefunden im Internet: URL:http://et.amazone.de/files/pdf/mg4707. pdf [gefunden am 2014-10-17]
- Ecomatic Mehr ET AL: "Leguminosen Getreide Raps Mais Kartoffeln Rüben Leguminosen", , 31. Dezember 2010 (2010-12-31), XP55147247, Gefunden im Internet: URL:http://www.agrar.basf.de/agroportal/de /media/migrated/de/infothek_neu/infomateri al_publicrelations_1/pdf_3/profi_tools/pdf _7/Ecomatic_Broschuere_2010.pdf [gefunden am 2014-10-17]

## Beschreibung

Die vorliegende Erfindung betrifft das Gebiet des Ausbringens von Pflanzenschutzmitteln und insbesondere das Management des Befüllens einer Pflanzenschutzmittelverteilungsvorrichtung, wie einer Feldspritze, mit einem Pflanzenschutzmittel.

Das Ausbringen von Pflanzenschutzmitteln auf agrarisch genutzten Feldern erfolgt heutzutage häufig mithilfe von durch Computerprogramme erstellten Aufträgen. In einem Prospekt für die Feldspritze UX 11200 von Amazone vom 19.11.2012 wird eine Anhängespritze beschrieben, bei der eine Befüllung aus einem Großgewinde mit Hilfe eines Ecofill-Anschlusses ermöglicht wird. In einem weiteren Prospekt von Amazone, "Comfort-Paket 2 für Pantera 4001" wird ein Bedienterminal für das Eingeben von Befülldaten einer Feldspritze beschrieben.

Der Anwender kann Pflanzenschutzmaßnahmen über ein Farm-Management-Information-System (FMIS) von zuhause aus mithilfe eines Computersystems planen. Digital kartierte agrarisch genutzte Flächen bzw. so genannte Schläge werden für die Behandlung mit Pflanzenschutzmitteln ausgewählt, es werden die jeweilig angebrachten Pflanzenschutzmaßnahmen hinsichtlich des zu verwendenden Pflanzenschutzmittels sowie der benötigten Mengen desselben bestimmt und es werden die entsprechenden Daten an eine Bedienkonsole / ein Bedienterminal übertragen (beispielsweise über ein Funknetzwerk), das in einem Fahrzeug installiert ist, das zum Ausbringen des Pflanzenschutzmittels eingesetzt werden soll.

Ein solches Fahrzeug bewegt eine Pflanzenschutzmittelverteilungsvorrichtung (Pflanzenschutzmittelspritze), die das Pflanzenschutzmittel auf der jeweiligen programmierten Agrarfläche ausbringt. Hierbei wird das Pflanzenschutzmittel aus einem Spritzbrühebehälter einer Spritzvorrichtung bereitgestellt. Das Pflanzenschutzmittel wird in geeigneter Verdünnung mit Wasser auf der Agrarfläche ausgebracht. Herkömmlich muss der Nutzer vor Ort einen Befüllautomaten zum Einspülen des Pflanzenschutzmittels manuell nach Maßgabe eines an die Bedienkonsole gesendeten Befüllauftrags bedienen. Diese manuelle Bedienung kostet nicht nur Stillstandzeit, sondern birgt auch die Gefahr der Fehleingabe durch den Nutzer. Außerdem lassen sich bei Applikationen mit Pflanzenschutzmitteln mit mehrfachen Befüllungen die jeweils vor dem Wechsel des Pflanzenschutzmittels bzw. Nachfüllen des Pflanzenschutzmittels verbleibenden Restmengen in dem angebundenen Behälter bei einer computergestützten Auftragsplanung nicht vorab berechnen.

Es liegt daher der vorliegenden Erfindung die Aufgabe zugrunde, ein Befüllmanagement für Pflanzenschutzmittel bereitzustellen, das die oben genannten Probleme löst oder doch zumindest mildert.

Die oben genannte Aufgabe wird durch ein Verfahren zum Befüllmanagement einer Pflanzenschutzmittelverteilungsvorrichtung, beispielsweise einer (Anhänge)Feldspritze, mit einem Spritzbrühebehälter gelöst, wobei das Verfahren die folgenden Schritte aufweist:
Bereitstellen eines Befüllautomaten zum Befüllen des Spritzbrühebehälters;
Bereitstellen einer mobilen Computervorrichtung in Datenverbindung mit dem Befüllautomaten;
Senden eines Befüllauftrags an den Befüllautomaten durch die mobile Computervorrichtung; und
Befüllen des Spritzbrühebehälters durch den Befüllautomaten auf der Grundlage des Befüllauftrags.

Auswahl und Dosierung eines Pflanzenschutzmittels werden im Befüllauftrag festgelegt, und der Befüllautomat liefert das Pflanzenschutzmittel in den Spritzbrühebehälter, vom dem es mit einer gewünschten Menge an Wasser gemischt von der Pflanzenschutzmittelverteilungsvorrichtung ausgebracht werden kann. Anders als im Stand der Technik wird hierbei kein Befüllauftrag von einem Farm-Management-Information-System (FMIS), mithilfe dessen ein Nutzer am Hof-PC plant, an eine Bedienkonsole gesendet, die in einem Fahrzeug installiert ist, mit dem die Pflanzenschutzmittelverteilungsvorrichtung bewegt wird. Die Bedienkonsole stellt ein Computersystem dar, das über eine Nutzschnittstelle eine Eingabe eines Nutzers erlaubt.

Anders als im Stand der Technik muss nicht durch einen Nutzer nach Maßgabe eines in dem Bedienterminal vom FMIS empfangenen Befüllauftrags manuell eine Eingabe über das jeweils einzuspülende Pflanzenschutzmittel an dem Befüllautomaten vorgenommen werden. Erfindungsgemäß werden Befüllaufträge direkt von der mobilen Computervorrichtung, beispielsweise einem Notebook, Tablet-PC oder Smartphone, an den Befüllautomaten übermittelt, der automatisch die Befüllaufträge abarbeitet. Hierdurch wird nicht nur Zeit beim Befüllen der Pflanzenschutzmittelverteilungsvorrichtung gespart, sondern es wird auch das Risiko fehlerhafter Eingaben am Befüllautomaten durch einen Nutzer eliminiert.

Der Befüllauftrag im obigen Verfahren kann prinzipiell durch die mobile Computervorrichtung allein erstellt werden. Es kann jedoch auch gemäß einer Weiterbildung ein vorläufiger Befüllauftrag durch die mobile Computervorrichtung von einem FMIS empfangen werden und der Befüllauftrag, der an den Befüllautomaten gesendet wird, durch die mobile Computervorrichtung auf der Grundlage des vorläufigen Befüllauftrags erstellt werden. Insbesondere kann der an den Befüllautomaten gesendet Befüllauftrag mit dem vorläufigen Befüllauftrag, der am Hof-PC mithilfe des FMIS erstellt wurde, identisch sein. Durch die Verwendung der mobilen Computervorrichtung besteht jedoch die Möglichkeit, digital vorgeplante Befüllaufträge dynamisch und komfortabel stetig anzupassen. Im Stand der Technik lassen sich bei Applikationen mit mehrfach Befüllungen die jeweils im Spritzbrühebehälter verbleibenden Restmengen nicht vorab kalkulieren und sie müssen somit jeweils bei der Wiederbefüllung mitberücksichtigt und berechnet werden. Gemäß Beispielen des erfindungsgemäßen Verfahrens kann aber eine Rückmeldung über den Restfüllstand sowie die noch zu bearbeitende Fläche, beispielsweise über eine Bedienkonsole, die in einem Fahrzeug installiert ist, mit dem die Pflanzenschutzmittelverteilungsvorrichtung bewegt wird, an die mobile Computervorrichtung erfolgen. Die zukünftig abzuarbeitenden Befüllaufträge können dann durch die Computervorrichtung entsprechend angepasst werden.

Insbesondere kann das Verfahren zum Befüllmanagement einer Pflanzenschutzmittelverteilungsvorrichtung somit die Schritte des Sendens von Daten bezüglich einer Restfüllmenge des Spritzbrühebehälters an die mobile Computervorrichtung und des Anpassens eines bestehenden oder Erstellens eines neuen Befüllauftrags auf der Grundlage der Daten bezüglich der Restfüllmenge durch die mobile Computervorrichtung umfassen. Allgemein können Daten bezüglich der eingefüllten Menge eines Pflanzenschutzmittels von dem Befüllautomaten an die mobile Computervorrichtung und gegebenenfalls von dieser an das FMIS zur Dokumentation gesendet werden.

Das Anpassen eines oder mehrerer erstellter Befüllaufträge kann durch den Nutzer erfolgen, wenn er während einer Behandlung feststellt, dass Aufwandmengen von Pflanzenschutzmittel oder Wasser gegenüber der Vorplanung, beispielsweise am Hof, beispielsweise mithilfe des FMIS, zu verändern sind. Es hat jederzeit die Möglichkeit mithilfe der mobilen Computervorrichtung Änderungen der Aufträge für die nächsten Befülllungen vorzunehmen.

Sensoren, beispielsweise Herbizid-Sensoren (H-Sensoren) können an der Pflanzenschutzmittelverteilungsvorrichtung angebracht sein, die Sensordaten an die Bedienkonsole liefern können. Die Sensordaten können von der Bedienkonsole an die mobile Computervorrichtung gesendet werden, die dann zukünftig abzuarbeitende Befüllaufträge entsprechend anpassen kann. Somit kann das Verfahren die Schritte des Gewinnens von Sensordaten durch an der Pflanzenschutzmittelverteilungsvorrichtung angebrachte Sensoren, des Sendens der Sensordaten an die mobile Computervorrichtung und des Anpassens eines bestehenden oder Erstellens eines neuen Befüllauftrags auf der Grundlage der Sensordaten durch die mobile Computervorrichtung umfassen.

Die oben genannte Aufgabe wird auch durch ein System (Befüllmanagementsystem) gelöst, das eine Pflanzenschutzmittelverteilungsvorrichtung (beispielsweise eine (Anhänge)Feldspritze) mit einem Spritzbrühebehälter, einen Befüllautomaten und eine mobile Computervorrichtung umfasst, wobei die mobile Computervorrichtung in Datenverbindung mit dem Befüllautomaten steht. Hierbei ist die mobile Computervorrichtung dazu ausgebildet ist, einen Befüllauftrag an den Befüllautomaten zu senden, und der Befüllautomat ist dazu ausgebildet, den Spritzbrühebehälter auf der Grundlage des Befüllauftrags zu befüllen. Die mobile Computervorrichtung kann ein Notebook, Tablet-PC oder Smartphone sein oder umfassen.

Weiterhin kann das System ein Farm-Management-Information-System, FMIS, in Datenverbindung mit der mobilen Computervorrichtung umfassen. Befüllaufträge können vorläufig mithilfe des FMIS erstellt und an die mobile Computervorrichtung gesendet werden und gegebenenfalls auf der mobilen Computervorrichtung abgeändert werden, bevor sie an den Befüllautomaten gesendet werden. Auch ist es möglich, dass die abzuarbeitenden Aufträge komplett in der mobilen Computervorrichtung geplant werden.

Das System kann weiterhin eine Bedienkonsole umfassen, die in einem Fahrzeug, beispielsweise einem Traktor, installiert ist, mithilfe dessen die Pflanzenschutzmittelverteilungsvorrichtung über die mit einem Pflanzenschutzmittel zu behandelnde Fläche bewegt wird. Die Bedienkonsole stellt ein Computersystem dar, das über eine Nutzschnittstelle eine Eingabe eines Nutzers erlaubt. Die Bedienkonsole kann hier wie in den oben beschriebenen Verfahrensbeispielen insbesondere der Steuerung des Betriebs der Pflanzenschutzmittelverteilungsvorrichtung dienen. Protokolle beendeter Aufträge können von der mobilen Computervorrichtung zur Dokumentation an das FMIS gesendet werden. Der Status von bearbeitenden Aufträgen kann von der Bedienkonsole an die mobile Computervorrichtung gesendet werden. Wiederum dient, wie oben bereits mit Bezug auf das hier bereit gestellte Verfahren erläutert, das FMIS nicht dazu, direkt Befüllaufträge an die Bedienkonsole zu senden. Hier wie in sämtlichen Ausführungsformen des erfindungsgemäßen Systems und Verfahrens ist die mobile Computervorrichtung von der Bedienkonsole, die in eine Fahrzeug zum Bewegen der Pflanzenschutzmittelverteilungsvorrichtung vorgesehen sein kann, zu unterscheiden.

In sämtlichen oben genannten Beispielen des erfindungsgemäßen Verfahrens und Systems können die Daten teilweise oder vollständig per Funk, beispielsweise WLAN, UMTS, etc., übertragen werden. Die Formatierung der Daten kann dem ISOBUS- Standard (ISO 11783-10) entsprechen.

Im Folgenden werden Ausführungsformen eines erfindungsgemäßen Befüllmanagements unter Bezugnahme auf die Zeichnung beschrieben. Die beschriebenen Ausführungsformen sind in jeder Hinsicht lediglich als illustrativ und nicht als einschränkend anzusehen und verschiedene Kombinationen der angeführten Merkmale sind in der Erfindung eingeschlossen.

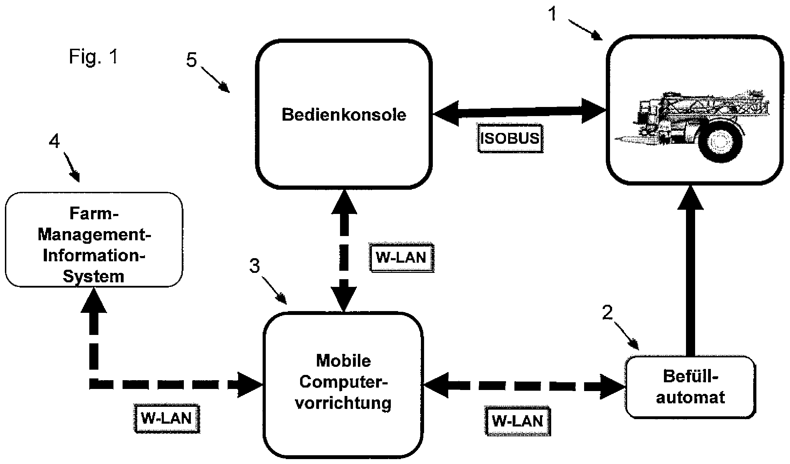

Figur 1 veranschaulicht ein Befüllmanagement gemäß einem Beispiel der vorliegenden Erfindung, in dem ein Befüllautomat für eine Pflanzenschutzmittelspritze im Datenaustausch mit einer mobilen Computervorrichtung steht, die einen Befüllauftrag an den Befüllautomaten liefert.

Die vorliegende Anmeldung betrifft das Management der Befüllung einer Pflanzenschutzmittelverteilungsvorrichtung mit einem Pflanzenschutzmittel. Die Pflanzenschutzmittelverteilungsvorrichtung wird in dem in Figur 1 gezeigten Beispiel in Form einer Anhängefeldspritze 1 bereitgestellt, die über einen Befüllautomaten 2 mit einem Pflanzenschutzmittel versorgt wird. Der Befüllautomat 2 füllt einen Behälter für Spritzbrühe der Anhängefeldspritze 1 mit einem Pflanzenschutzmittel. Der Befüllautomat 2 kann beispielsweise in Form des Ecomatik-Systems von BASF bereitgestellt werden. Beispielsweise kann das Pflanzenschutzmittel mithilfe einer Spritzenpumpe in den Spritzbrühebehälter gesaugt werden. Gemäß einem anderen Beispiel wird über eine Micro-Matic-Kupplung eine Impellerpumpe an einem Fass mit Pflanzenschutzmittel zur Förderung des Pflanzenschutzmittels angeschlossen. Über eine Zapfpistole fließt das Pflanzenschutzmittel dann direkt in die Einspülschleuse des Spritzbrühebehälters. Die berührungslose Befüllung schützt den Nutzer vor gesundheitsschädlichen Substanzen.

Das Pflanzenschutzmittel kann hierbei in einem Großgebinde mit beispielsweise neun 50 l Fässern oder siebenundzwanzig 30 l Fässern bereitgestellt werden. Über eine gravitative Messung kann eine exakte Dosage erfolgen. Der Nutzer muss also lediglich nacheinander die benötigten Mittelgebinde an den Befüllautomaten 2 anschließen, und gegebenenfalls nach Quittieren durch den Nutzer arbeitet der Befüllautomat 2 vollautomatisch. Verbindungsschläuche können, auch nach Teilentnahmen des Pflanzenschutzmittels, automatisch mit Klarwasser gereinigt werden. Sämtliche Schlauchkupplungen können tropffrei ausgebildet sein.

Gemäß der vorliegenden Erfindung wird eine mobile Computervorrichtung 3 für einen Datenaustausch mit dem Befüllautomaten 2 bereitgestellt. Die mobile Computervorrichtung 3 kann ein Notebook oder Tablet-PC oder ein Smartphone sein oder umfassen. Die Datenverbindung zwischen der mobilen Computervorrichtung 3 und dem Befüllautomaten 2 kann drahtlos, beispielsweise über WLAN, erfolgen. Ebenfalls drahtlos, beispielsweise über WLAN oder UMTS, kann die mobile Computervorrichtung 3 Daten mit einem Farm-Management-Information-System (FMIS) 4 austauschen. Mithilfe des FMIS 4 kann der Nutzer Applikationen planen und protokollieren, wobei ihm dabei durch das FMIS 4 digitalisierte Karten/Ackerschlagdateien bereitgestellt werden. Es kann vorgesehen sein, dass sämtliche von und zu der mobilen Computervorrichtung 3 übertragenen Daten dem ISOBUS- Standard (ISO11783-10), einem herstellerunabhängigen Kommunikationsstandard, entsprechen.

Die mobile Computervorrichtung 3 ist außerdem mit einer Bedienkonsole/-terminal 5 eines Fahrzeugs zum Ziehen der Anhängefeldspritze 1, beispielsweise drahtlos über WLAN, verbunden. Bei der Bedienkonsole 5 kann es sich beispielsweise um ein AMAPAD-Bedienterminal handeln, das mithilfe einer ISOBUS-Verbindung mit der Anhängefeldspritze 1 verbunden sein kann. Die Bedienkonsole 5 dient insbesondere der Steuerung des Betriebs der Anhängefeldspritze 1. Die Bedienkonsole 5 kann eine GPS-Anwendung zur Spurführung mit grafischer Anzeige auf einem Bildschirm umfassen.

Der Nutzer kann digital kartierte Schläge am Hof-PC mithilfe des FMIS 4 auswählen und die Pflanzenschutzmaßnahme mit dem gewünschten Pflanzenschutzmittel und den gewünschten Aufwandmengen planen und einen entsprechenden Befüllauftrag erstellen. Diesen Befüllauftrag kann er dann an die mobile Computervorrichtung 3 senden. Prinzipiell kann er den Befüllauftrag als einen provisorischen Befüllauftrag auf der mobilen Computervorrichtung 3 abändern. Alternativ kann er den Befüllauftrag für die beabsichtigte Pflanzenschutzmaßnahme auf der Grundlage digital kartierte Schläge und gemäß dem gewünschten Pflanzenschutzmittel und den gewünschten Aufwandmengen direkt auf der mobilen Computervorrichtung 3 erstellen.

Erfindungsgemäß wird schließlich ein Befüllauftrag von der mobilen Computervorrichtung 3 an den Befüllautomaten 2 gesendet, der auf der Grundlage des von der mobilen Computervorrichtung 3 empfangenen Befüllauftrags einen Spritzbrühebehälter der Anhängefeldspritze 1 mit einem Pflanzenschutzmittel befüllt. Die mobile Computervorrichtung 3 wird von einem Nutzer mit an den Arbeitsort der Anhängefeldspritze 1 gebracht. Vor Ort können Befüllaufträge an die örtlichen Gegebenheiten angepasst werden. Beispielsweise können Sensoren, etwa Herbizid-Sensoren, an der Anhängefeldspritze 1 angebracht sein und die mithilfe der Sensoren gewonnenen Sensordaten an die mobile Computervorrichtung (3) gesendet werden. Die mobile Computervorrichtung (3) kann auf der Grundlage der Sensordaten einen bestehenden Befüllauftrag, den sie zuvor erstellt hat oder von dem FMIS 4 empfangen hat, anpassen oder einen neuen Befüllauftrag erstellen. Ebenso können Daten bezüglich einer Restfüllmenge des Spritzbrühebehälters an die mobile Computervorrichtung (3) gesendet werden und bei Wechsel des Pflanzenschutzmittels bzw. Nachfüllen des Pflanzenschutzmittels entsprechend der Restfüllmenge durch die mobile Computervorrichtung (3) ein bestehender Befüllauftrag angepasst oder ein neuer Befüllauftrag erstellt werden.

In der in Figur 1 gezeigten Ausführungsform wird somit ein geschlossenes Befüllmanagementsystem mit einer Anhängefeldspritze 1, einem FMIS 4, das einen vorläufigen geplanten Befüllauftrag bereitstellen kann, einer mobilen Computervorrichtung 3, die einen Befüllauftrag auf der Grundlage des vorläufigen Befüllauftrags oder völlig selbstständig erstellt, und einem Befüllautomater 2, der den Befüllauftrag von der mobilen Computervorrichtung 3 erhält, sowie einer Bedienkonsole 5 zum Steuern des Betriebs der Anhängefeldspritze 1 bereitgestellt.

Allgemein können Befüllaufträge durch einen Datenaustausch der Bedienkonsole 5 und der mobilen Computervorrichtung 3, die Befüllaufträge an den Befüllautomaten 2 sendet, den aktuellen Verhältnissen angepasst werden. Im Vergleich zum Stand der Technik der Technik führen kürzere Befüllzeiten zu kürzeren Stillstandzeiten. Zudem wird eine exakte und wunschweise stetig angepasste Dosage ermöglicht, so dass nur die tatsächlich benötigte Konzentration an Pflanzenschutzmittel ausgebracht wird. Eine fehleranfällige und zeitintensive manuelle Einstellung des Befüllautomaten durch einen Nutzer kann vorteilhafter Weise entfallen.

## Patentansprüche

1. Verfahren zum Befüllmanagement einer Pflanzenschutzmittelverteilungsvorrichtung (1) mit einem Spritzbrühebehälter mit den Schritten:
Bereitstellen eines Befüllautomaten (2) zum Befüllen des Spritzbrühebehälters;
Bereitstellen einer mobilen Computervorrichtung (3) in Datenverbindung mit dem Befüllautomaten (2);
Senden eines Befüllauftrags an den Befüllautomaten (2) durch die mobile Computervorrichtung (3); und
Befüllen des Spritzbrühebehälters durch den Befüllautomaten (2) auf der Grundlage des Befüllauftrags.

2. Verfahren gemäß Anspruch 1, weiterhin mit Erstellen des Befüllauftrags durch die mobile Computervorrichtung (3).

3. Verfahren gemäß Anspruch 1, weiterhin mit Empfangen eines vorläufigen Befüllauftrags durch die mobile Computervorrichtung (3) von einem Farm-Management-Information-System, FMIS, (4) und Erstellen des Befüllauftrags durch die mobile Computervorrichtung (3) auf der Grundlage des vorläufigen Befüllauftrags.

4. Verfahren gemäß einem der vorhergehenden Ansprüche, weiterhin mit Anpassen eines bestehenden Befüllauftrags auf der mobilen Computervorrichtung (2) durch einen Nutzer.

5. Verfahren gemäß einem der vorhergehenden Ansprüche, weiterhin mit Gewinnen von Sensordaten durch an der Pflanzenschutzmittelverteilungsvorrichtung (1) angebrachte Sensoren, Senden der Sensordaten an die mobile Computervorrichtung (3) und Anpassen eines bestehenden oder Erstellen eines neuen Befüllauftrags auf der Grundlage der Sensordaten durch die mobile Computervorrichtung (3).

6. Verfahren gemäß einem der vorhergehenden Ansprüche, weiterhin mit Senden von Daten bezüglich einer Restfüllmenge des Spritzbrühebehälters an die mobile Computervorrichtung (3) und Anpassen eines bestehenden oder Erstellen eines neuen Befüllauftrags auf der Grundlage der Daten bezüglich der Restfüllmenge durch die mobile Computervorrichtung (3).

7. Verfahren gemäß einem der vorhergehenden Ansprüche, ohne Senden eines Befüllauftrags von einem Farm-Management-Information-System, FMIS, (4) an den Befüllautomaten (2) und/oder ohne manuelles Einstellen des Befüllautomaten (2) gemäß einem Befüllauftrag durch einen Nutzer.

8. Verfahren gemäß einem der vorhergehenden Ansprüche, in dem die Pflanzenschutzmittelverteilungsvorrichtung (1) eine Feldspritze ist.

9. System, mit
einer Pflanzenschutzmittelverteilungsvorrichtung (1) mit einem Spritzbrühebehälter;
einem Befüllautomaten (2);
einer mobilen Computervorrichtung (3) in Datenverbindung mit dem Befüllautomaten (2);
wobei die mobile Computervorrichtung (3) dazu ausgebildet ist, einen Befüllauftrag an den Befüllautomaten (2) zu senden; und
der Befüllautomat (2) dazu ausgebildet ist, den Spritzbrühebehälter auf der Grundlage des Befüllauftrags zu befüllen.

10. System gemäß Anspruch 9, in dem die Pflanzenschutzmittelverteilungsvorrichtung (1) eine Feldspritze ist.

11. System gemäß Anspruch 9 oder 10, in dem die mobile Computervorrichtung (3) ein Notebook, Tablet-PC oder Smartphone ist oder umfasst.

12. System gemäß einem der Ansprüche 9 bis 11, weiterhin mit einem Farm-Management-Information-System, FMIS, (4) in Datenverbindung mit der mobilen Computervorrichtung (3).

13. System gemäß Anspruch 12, weiterhin mit einer in einem Fahrzeug zum Bewegen der Pflanzenschutzmittelverteilungsvorrichtung (1) installierten Bedienkonsole (5), die in Datenverbindung mit der mobilen Computervorrichtung (3) und dem FMIS (4) steht.

## Claims

1. Method for managing the filling of a crop protection product distribution apparatus (1) having a spray mixture container, having the steps of:
providing a filling machine (2) for filling the spray mixture container;
providing a mobile computer apparatus (3) which has a data connection to the filling machine (2);
transmitting a filling order to the filling machine (2) by means of the mobile computer apparatus (3); and
filling the spray mixture container by means of the filling machine (2) on the basis of the filling order.

2. Method according to Claim 1, also comprising creating the filling order by means of the mobile computer apparatus (3).

3. Method according to Claim 1, also comprising receiving a provisional filling order from a farm management information system (4), FMIS, by means of the mobile computer apparatus (3) and creating the filling order by means of the mobile computer apparatus (3) on the basis of the provisional filling order.

4. Method according to one of the preceding claims, also comprising adapting an existing filling order on the mobile computer apparatus (2) by a user.

5. Method according to one of the preceding claims, also comprising obtaining sensor data by means of sensors fitted to the crop protection product distribution apparatus (1), transmitting the sensor data to the mobile computer apparatus (3) and adapting an existing filling order or creating a new filling order on the basis of the sensor data by means of the mobile computer apparatus (3).

6. Method according to one of the preceding claims, also comprising transmitting data relating to a residual filling quantity of the spray mixture container to the mobile computer apparatus (3) and adapting an existing filling order or creating a new filling order on the basis of the data relating to the residual filling quantity by means of the mobile computer apparatus (3).

7. Method according to one of the preceding claims, without transmitting a filling order from a farm management information system (4), FMIS, to the filling machine (2) and/or without manually setting the filling machine (2) according to a filling order by a user.

8. Method according to one of the preceding claims, in which the crop protection product distribution apparatus (1) is a field sprayer.

9. System having
a crop protection product distribution apparatus (1) having a spray mixture container;
a filling machine (2);
a mobile computer apparatus (3) which has a data connection to the filling machine (2);
wherein the mobile computer apparatus (3) is designed to transmit a filling order to the filling machine (2); and
the filling machine (2) is designed to fill the spray mixture container on the basis of the filling order.

10. System according to Claim 9, in which the crop protection product distribution apparatus (1) is a field sprayer.

11. System according to Claim 9 or 10, in which the mobile computer apparatus (3) is or comprises a notebook, a tablet PC or a smartphone.

12. System according to one of Claims 9 to 11, also having a farm management information system (4), FMIS, which has a data connection to the mobile computer apparatus (3).

13. System according to Claim 12, also having an operating console (5) which is installed in a vehicle for moving the crop protection product distribution apparatus (1) and has a data connection to the mobile computer apparatus (3) and to the FMIS (4).

## Revendications

1. Procédé de gestion du remplissage d'un dispositif de distribution de produit phytosanitaire (1) doté d'un réservoir à bouille de pulvérisation, comprenant les étapes suivantes :
fourniture d'une remplisseuse automatique (2) pour le remplissage du réservoir à bouille de pulvérisation ;
fourniture d'un dispositif informatique mobile (3) en connexion de données avec la remplisseuse automatique (2) ;
envoi d'un ordre de remplissage à la remplisseuse automatique (2) par le dispositif informatique mobile (3) ; et
remplissage du réservoir à bouille de pulvérisation par la remplisseuse automatique (2) sur la base de l'ordre de remplissage.

2. Procédé selon la revendication 1, comprenant en outre la création de l'ordre de remplissage par le dispositif informatique mobile (3).

3. Procédé selon la revendication 1, comprenant en outre la réception d'un ordre de remplissage provisoire par le dispositif informatique mobile (3) de la part d'un système d'information de gestion d'exploitation agricole, FMIS, (4) et la création de l'ordre de remplissage par le dispositif informatique mobile (3) sur la base de l'ordre de remplissage provisoire.

4. Procédé selon l'une des revendications précédentes, comprenant en outre l'adaptation d'un ordre de remplissage existant sur le dispositif informatique mobile (3) par un utilisateur.

5. Procédé selon l'une des revendications précédentes, comprenant en outre l'obtention de données de capteur par des capteurs montés sur le dispositif de distribution de produit phytosanitaire (1), l'envoi des données de capteur au dispositif informatique mobile (3) et l'adaptation d'un ordre de remplissage existant ou la création d'un nouveau sur la base des données de capteur par le dispositif informatique mobile (3).

6. Procédé selon l'une des revendications précédentes, comprenant en outre l'envoi de données concernant une quantité de remplissage résiduelle du réservoir à bouille de pulvérisation au dispositif informatique mobile (3) et l'adaptation d'un ordre de remplissage existant ou la création d'un nouveau sur la base des données concernant la quantité de remplissage résiduelle par le dispositif informatique mobile (3).

7. Procédé selon l'une des revendications précédentes, sans l'envoi d'un ordre de remplissage par un système d'information de gestion d'exploitation agricole, FMIS, (4) à la remplisseuse automatique (2) et/ou sans le réglage manuel de la remplisseuse automatique (2) par un utilisateur conformément à un ordre de remplissage.

8. Procédé selon l'une des revendications précédentes, dans lequel le dispositif de distribution de produit phytosanitaire (1) est un pulvérisateur à cultures.

9. Système, comprenant
un dispositif de distribution de produit phytosanitaire (1) doté d'un réservoir à bouille de pulvérisation ;
une remplisseuse automatique (2) ;
un dispositif informatique mobile (3) en connexion de données avec la remplisseuse automatique (2) ;
le dispositif informatique mobile (3) étant configuré pour envoyer un ordre de remplissage à la remplisseuse automatique (2) ; et
la remplisseuse automatique (2) étant configurée pour remplir le réservoir à bouille de pulvérisation sur la base de l'ordre de remplissage.

10. Système selon la revendication 9, dans lequel le dispositif de distribution de produit phytosanitaire (1) est un pulvérisateur à cultures.

11. Système selon la revendication 9 ou 10, dans lequel le dispositif informatique mobile (3) est ou comprend un ordinateur portable, un PC tablette ou un Smartphone.

12. Système selon l'une des revendications 9 à 11, comprenant en outre un système d'information de gestion d'exploitation agricole, FMIS (4), en connexion de données avec le dispositif informatique mobile (3).

13. Système selon la revendication 12, comprenant en outre une console de conduite (5) installée dans un véhicule servant à déplacer le dispositif de distribution de produit phytosanitaire (1), laquelle se trouve en connexion de données avec le dispositif informatique mobile (3) et le FMIS (4).
